# FASCICULE DE BREVET EUROPEEN

(11) **EP 3 807 507 B1**
(45) Date de publication et mention de la délivrance du brevet: **16.02.2022**
(21) Numéro de dépôt: 19735367.5
(22) Date de dépôt: 05.06.2019
(51) Int. Cl.: F02C 7/36, F16H 57/08, F16H 57/04

(54) **DISPOSITIF DE REPARTITION D'HUILE POUR UN PORTE-SATELLITES TOURNANT D'UN REDUCTEUR MECANIQUE D'UNE TURBOMACHINE**
VORRICHTUNG ZUR ÖLVERTEILUNG FÜR EINEN ROTIERENDEN PLANETENTRÄGER EINES UNTERSETZUNGSGETRIEBES EINER TURBOMASCHINE
DEVICE FOR OIL DISTRIBUTION FOR A ROTATING PLANET CARRIER OF A STEP-DOWN GEAR OF A TURBOMACHINE

(30) Priorité: 12.06.2018 FR 1855125
(43) Date de publication de la demande: 21.04.2021
(73) Titulaire: SAFRAN AIRCRAFT ENGINES, 75015 Paris (FR)
(72) Inventeur: MORREALE, Serge, René, 77550 MOISSY-CRAMAYEL (FR); GILLE, Laurent, 77550 MOISSY-CRAMAYEL (FR)
(74) Mandataire: Gevers & Orès
(86) Numéro de dépôt international: PCT/FR2019/051339
(87) Numéro de publication internationale: WO 2019/239032

(56) Documents cités:
- EP-A1- 3 159 578
- FR-A1- 3 041 054
- US-A1- 2013 225 353

## Description

### Domaine de l'invention

La présente invention concerne le domaine des réducteurs de vitesse pour une turbomachine en particulier d'aéronef, et plus spécifiquement les réducteurs mécanique dont le porte-satellites est tournant, c'est-à-dire mobile en rotation. L'invention est particulièrement adaptée mais non exclusivement pour les réducteurs dont les satellites sont montés sur des paliers à rouleaux.

### Etat de la technique

L'état de l'art comprend notamment les documents EP-A1-3 159 578, WO-A1-2010/092263, FR-A1-2 987 416, FR-A1-3 041 054 et WO-A1-2014/037659.

Le rôle d'un réducteur mécanique est de modifier le rapport de vitesse et le couple entre l'axe d'entrée et l'axe de sortie d'un mécanisme.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différents équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
∘ sur un réducteur planétaire, le porte-satellites est fixe et la couronne constitue l'arbre de sortie du dispositif qui tourne dans le sens inverse du solaire.
∘ sur un réducteur épicycloïdal, la couronne est fixe et le porte-satellites constitue l'arbre de sortie du dispositif qui tourne dans le même sens que le solaire.
∘ sur un réducteur différentiel, aucun élément n'est fixé en rotation. La couronne tourne dans le sens contraire du solaire et du porte-satellites.

Les réducteurs peuvent être composés d'un ou plusieurs étages d'engrènement. Cet engrènement est assuré de différentes façons comme par contact, par friction ou encore par champ magnétique.

Il existe plusieurs types d'engrènement par contact comme avec des dentures droites ou en chevron.

Le fonctionnement des réducteurs nécessite un débit d'huile particulièrement important pour assurer la lubrification et le refroidissement de ses éléments mécaniques.

Cependant, ce type de réducteur présente des inconvénients liés à sa lubrification.

Dans la technique actuelle, un satellite est en général guidé en rotation par un palier qui s'étend autour d'un support tubulaire du porte-satellites, ce support tubulaire comportant une chambre interne de réception d'huile et des orifices sensiblement radiaux traversants de passage d'huile depuis la chambre interne jusqu'au palier.

Pour un réducteur épicycloïdal, il est préférable de guider les satellites par des paliers lisses, mais on a déjà proposé de remplacer ces paliers par des paliers à rouleaux. La distribution de l'huile de lubrification dans de tels paliers est toutefois encore plus complexe car les rouleaux d'une part et les cages des paliers d'autre part, doivent être lubrifiés efficacement. Ces difficultés sont dues à la centrifugation de l'huile et sont donc dues au fait que le porte-satellites est mobile en rotation. En l'absence de répartition d'huile efficace au niveau des paliers, le débit d'huile est le plus élevé au niveau des orifices les plus éloignés de l'axe de rotation du porte-satellites et le plus faible au niveau des orifices les plus proches, précisément là où le besoin de lubrification est le plus important car la cage du palier exerce une pression importante sur les pistes de la bague interne.

La présente invention propose un perfectionnement à cette technologie qui permet d'optimiser la lubrification d'un réducteur à porte-satellites tournant pour lequel l'huile de lubrification du porte-satellites est soumise en fonctionnement à des champs centrifuges importants.

### Exposé de l'invention

Selon un premier aspect, l'invention concerne un dispositif de répartition d'huile pour un porte-satellites tournant d'un réducteur mécanique d'une turbomachine, caractérisé en ce que ce dispositif est configuré pour être solidaire, de préférence coaxialement, d'un organe tubulaire de support d'un palier du porte-satellites, caractérisé en ce que ledit dispositif comportant une entrée d'huile et une rangée, de préférence annulaire, de sorties d'huile débouchant sur une surface externe destinée à être entourée au moins en partie par ledit organe, ledit dispositif comportant au moins deux cavités internes connectées en série par au moins un orifice calibré, l'une de ces cavités, appelée cavité réceptrice, étant connectée à ladite entrée d'huile, et des canaux internes calibrés d'acheminement d'huile s'étendant, de préférence sensiblement radialement, depuis lesdites cavités jusqu'à des orifices de ladite surface externe du dispositif pour former lesdites sorties d'huile.

Dans la présente demande, on entend par « rangée annulaire », une répartition autour d'une circonférence. Dans le cas des sorties d'huile, elles sont donc réparties ou distribuées sur une circonférence. La circonférence s'étend ici sur la périphérie externe du dispositif et est donc centrée sur l'axe de révolution du dispositif.

L'invention propose ainsi un dispositif dédié à la répartition de l'huile dans un organe tubulaire d'un porte-satellites mobile d'un réducteur. Ce dispositif peut se présenter sous la forme d'un disque ou comprendre un tel disque, qui peut être intégré à l'organe ou rapporté dans ce dernier. Ce dispositif comprend pour l'essentiel des cavités internes, des orifices calibrés de raccordement des cavités internes entre elles, et des canaux de raccordement des cavités à des orifices de sortie d'huile situés à la périphérie externe du dispositif.

Le dispositif est configuré pour être solidaire de l'organe tubulaire du support de palier et a une forme lui permettant ce montage. Il n'a donc pas nécessairement un contour périphérique parfaitement circulaire par exemple. Ce dispositif est avantageusement amovible.

Dans la présente demande, on entend par orifices et canaux « calibrés » des orifices et des canaux dont la section de passage est prédéterminée en fonction d'un débit d'huile souhaité. Cette calibration tient compte de la position des orifices et des canaux par rapport à l'axe de rotation du porte-satellites et donc des champs centrifuges appliqués à l'huile qui circule dans ces zones en fonctionnement.

Dans la présente demande, on entend par organe tubulaire d'un porte-satellites, l'association d'un support tubulaire et d'une bague interne d'un palier à roulements. La bague interne est montée autour du support tubulaire et peut être formée d'une seule pièce avec ce support. En variante, la bague est rapportée et montée sur le support tubulaire.

Le dispositif selon l'invention peut comprendre une ou plusieurs des caractéristiques suivantes, prises isolément les unes des autres, ou en combinaison les unes avec les autres :
- le dispositif est configuré pour être rapporté et fixé, par exemple par frettage, dans ledit organe tubulaire,
- les cavités sont agencées le long d'une ligne qui passe sensiblement par le centre du dispositif et de préférence par un rayon du dispositif,
- ladite cavité réceptrice est proche de la périphérie du dispositif et est destinée à être la plus proche d'un axe de rotation du porte-satellites lorsque le dispositif est monté sur le porte-satellites,
- ledit dispositif comprend un alésage interne dans lequel sont rapportées et fixées, par exemple par frettage, des pastilles qui comprennent chacune un desdits orifices calibrés, lesdites pastilles délimitant entre elles lesdites cavités,
- ledit alésage est étagé et comprend plusieurs tronçons de diamètre différents et de préférence agencés du tronçon de plus petit diamètre vers le tronçon de plus grand diamètre, ce dernier étant débouchant à la périphérie du dispositif,
- ledit dispositif comprend une base circulaire dont une face est usinée et un couvercle annulaire rapporté sur ladite base, du côté de sa face usinée, cette face étant usinée pour définir lesdites cavités et lesdits canaux entre la base et le couvercle,
- ladite base comprend à sa périphérie une rangée annulaire de lunules raccordées auxdites sorties d'huile,
- l'une desdites cavités est usinée dans toute l'épaisseur de ladite base pour former également ladite entrée d'huile,
- ladite base et ledit couvercle comprennent chacun une rangée annulaire d'orifices de passage de vis de fixation,
- ladite base ou ledit couvercle est solidaire d'un organe de préhension pour faciliter le montage et le démontage du dispositif,
- ladite base et/ou ledit couvercle comprend un moyen d'indexage pour son positionnement angulaire dans le support tubulaire,
- chacune desdites cavités a une forme générale cylindrique dont l'axe de révolution est orienté perpendiculairement au plan du dispositif ou situé dans le plan du dispositif,
- ladite entrée d'huile est plus proche de la périphérie externe du dispositif que de son centre,
- ladite entrée d'huile est orientée dans une direction perpendiculaire au plan du dispositif,
- les canaux sont positionnés de manière symétrique par rapport à un plan perpendiculaire audit dispositif,
- les diamètres des canaux sont choisis entre 0,5 et 3mm, et de préférence entre 0,7 et 2mm, et
- les diamètres des orifices calibrés sont choisis entre 0,5 et 7mm, et de préférence entre 0,7 et 5mm.

La présente invention concerne également un porte-satellites tournant pour un réducteur mécanique d'une turbomachine, ce porte-satellites comportant une rangée annulaire d'organes tubulaires de support de paliers qui sont parallèles entre eux et à un axe de rotation du porte-satellites, des pistes et surfaces cylindriques de guidage de roulements et d'au moins une cage de ces roulements étant définis à la périphérie de chacun des organes tubulaires, et au moins un dispositif tel que décrit ci-dessus étant solidaire coaxialement de chacun de ces organes tubulaires.

Le porte-satellites selon l'invention peut comprendre une ou plusieurs des caractéristiques suivantes, prises isolément les unes des autres, ou en combinaison les unes avec les autres :
- chacun desdits organes tubulaires comprend un support tubulaire comportant une surface cylindrique externe de montage d'une bague interne de palier, et sur laquelle sont formées des rainures de circulation d'huile qui sont en communication fluidique avec lesdites sorties d'huile du dispositif, d'une part, et des conduits d'huile formés dans la bague interne, d'autre part, lesdites rainures étant sensiblement rectilignes et parallèles entre elles ainsi qu'à un axe de révolution de la surface cylindrique,
- chacun desdits supports tubulaires comprend des trous traversants de mise en communication fluidique desdites rainures avec lesdites sorties d'huile du dispositif,
- chacune desdites rainures est reliée à plusieurs conduits, d'une part, et par un unique trou à une unique sortie d'huile et à un unique canal dudit dispositif, d'autre part,
- au moins certaines desdites rainures ont une largeur ou étendue angulaire autour dudit axe de révolution, qui est supérieure au diamètre des trous et du canal reliés à cette rainure,
- le canal est raccordé à la rainure correspondante au niveau d'un premier bord longitudinal de cette rainure, et les trous sont raccordés à cette rainure au niveau d'un second bord longitudinal opposé de cette rainure, et, pour chaque rainure, ledit premier bord étant plus éloigné dudit axe de rotation du porte-satellites que ne l'est ledit second bord.

La présente invention concerne également une turbomachine d'aéronef, caractérisée en ce qu'elle comprend un dispositif ou un porte-satellites tel que décrit ci-dessus.

Selon un second aspect, l'invention concerne un porte-satellites tournant pour un réducteur mécanique d'une turbomachine, ce porte-satellites comportant une rangée annulaire d'organes tubulaires de support de paliers, qui sont parallèles entre eux et à un axe de rotation du porte-satellites, chacun desdits organes tubulaires comprenant une surface périphérique externe définissant des pistes et surfaces cylindriques de guidage de roulements et d'au moins une cage de ces roulements, et une surface cylindrique interne délimitant une chambre interne configurée pour être alimentée en huile en fonctionnement, des passages d'huile s'étendant entre la surface cylindrique interne et la surface périphérique externe pour l'acheminement de l'huile depuis ladite chambre jusqu'aux roulements et à la cage,
caractérisé en ce que chacun des organes tubulaires comprend des rainures de circulation d'huile qui sont reliées à des canaux formant au moins une partie desdits passages et s'étendant depuis les rainures jusqu'à ladite surface périphérique externe, ces rainures étant sensiblement rectilignes et parallèles entre elles ainsi qu'à un axe de révolution de ladite surface cylindrique interne de l'organe tubulaire correspondant, au moins certaines desdites rainures ayant une largeur ou étendue angulaire autour dudit axe de révolution, qui est supérieure au diamètre des conduits reliés à cette rainure, et au moins certains desdits conduits étant raccordés à la rainure correspondante au niveau de l'un des bords longitudinaux de cette rainure, à savoir celui qui est le plus proche dudit axe de rotation du porte-satellites.

L'invention concerne ici un porte-satellites dont chaque organe tubulaire comprend un réseau de circulation d'huile qui est conçu pour mieux distribuer l'huile entre les différents canaux. En fonctionnement, du fait des champs centrifuges, l'huile est forcée à s'accumuler principalement au niveau des bords longitudinaux des rainures qui sont les plus éloignées de l'axe de rotation du porte-satellites. L'huile s'accumule dans les rainures et alimente simultanément les conduits qui sont situés au niveau des bords longitudinaux opposés. Les débits d'huile qui alimentent ces différents conduits sont donc sensiblement identiques ce qui garantit une lubrification optimale des pistes cylindriques des organes.

Le porte-satellites selon l'invention peut comprendre une ou plusieurs des caractéristiques suivantes, prises isolément les unes des autres, ou en combinaison les unes avec les autres :
- chacun desdits organes tubulaires comprend un support tubulaire et une bague interne d'au moins un palier à roulement, cette bague interne étant intégrée audit support ou rapportée et fixée autour dudit support,
- chacun desdits supports tubulaires comprend une surface cylindrique externe sur laquelle est montée ladite bague interne, lesdits passages comprenant, d'une part, lesdits conduits qui s'étendent entre ladite surface périphérique externe définie par la bague et lesdites rainures, et, d'autre part, des trous traversants qui s'étendent entre ladite surface cylindrique interne et lesdites rainures, les rainures étant formées entre le support tubulaire et la bague,
- lesdites rainures sont formées sur la surface cylindrique externe de chaque support tubulaire,
- lesdits trous sont raccordés aux rainures au niveau de l'autre des bords longitudinaux de ces rainures, à savoir celui qui est le plus éloigné dudit axe de rotation du porte-satellites,
- chacune desdites rainures est reliée à plusieurs conduits, d'une part, et à un unique trou, d'autre part,
- un dispositif de répartition d'huile est associé à chacun desdits organes tubulaires et comprend un dispositif configuré pour être solidaire coaxialement de l'organe tubulaire correspondant,
- ledit dispositif comporte une entrée d'huile et une rangée, de préférence annulaire, de sorties d'huile débouchant sur une surface externe destinée à être entourée au moins en partie par l'organe, ledit dispositif comportant au moins deux cavités internes connectées en série par au moins un orifice calibré, l'une de ces cavités, appelée cavité réceptrice, étant connectée à ladite entrée d'huile, et des canaux internes calibrés d'acheminement d'huile s'étendant, de préférence sensiblement radialement, depuis lesdites cavités jusqu'à des orifices de ladite surface externe du dispositif pour former lesdites sorties d'huile qui sont en communication fluidique avec lesdites rainures,
- ledit dispositif est configuré pour être rapporté et fixé, par exemple par frettage, dans ledit organe tubulaire.

La présente invention concerne également une turbomachine d'aéronef, caractérisée en ce qu'elle comprend un porte-satellites tel que décrit ci-dessus.

### Brève description des figures

D'autres caractéristiques et avantages ressortiront de la description qui suit d'un mode de réalisation non limitatif de l'invention en référence aux dessins annexés sur lesquels :
- la figure 1 est une vue schématique en coupe axiale d'une turbomachine d'aéronef,
- la figure 2 est une vue très schématique et simplifié d'un train épicycloïdal en particulier d'un réducteur de vitesse,
- la figure 3 est une vue schématique partielle en coupe axiale d'un réducteur de vitesse à porte-satellites tournant,
- la figure 4 est une vue schématique écorchée en perspective du réducteur de la figure 3,
- la figure 5 est une vue schématique en coupe transversale d'un organe tubulaire d'un porte-satellites de réducteur,
- la figure 6 est une vue schématique en coupe axiale de l'organe tubulaire de la figure 5 ;
- la figure 7 est une vue schématique en coupe transversale d'un organe tubulaire d'un porte-satellites de réducteur équipé d'un dispositif de répartition d'huile selon l'invention,
- la figure 8 est une vue schématique partielle et en perspective d'une piste cylindrique de guidage d'une cage d'un palier à roulement du réducteur,
- la figure 9 est une vue schématique en coupe axiale d'une variante de réalisation du dispositif selon l'invention ;
- la figure 10 est une vue schématique en coupe transversale selon la ligne A-A de la figure 9, le dispositif étant monté dans un organe tubulaire de porte-satellites,
- les figures 11 et 12 sont des vues schématiques en coupe transversale de l'organe tubulaire de la figure 9, sans et avec le dispositif,
- la figure 13 est une vue schématique en coupe axiale d'un organe tubulaire de porte-satellites, équipé d'une variante de réalisation du dispositif selon l'invention ;
- la figure 14 est une vue schématique en coupe transversale de l'organe tubulaire de la figure 13,
- la figure 15 est une vue schématique en coupe selon la ligne B-B du dispositif de répartition de la figure 13,
- la figure 16 est une vue schématique en coupe transversale d'un organe tubulaire de porte-satellites,
- les figures 17 et 18 sont des vues schématiques en coupe selon les lignes A-A et B-B de la figure 16,
- la figure 19 est une vue schématique en coupe axiale d'un organe tubulaire de porte-satellites, équipé d'une autre variante de réalisation du dispositif selon l'invention ;
- la figure 20 est une vue schématique en coupe selon la ligne A-A de la figure 19,
- la figure 21 est une vue schématique en coupe axiale d'un organe tubulaire de porte-satellites, équipé d'une autre variante de réalisation du dispositif selon l'invention ;
- la figure 22 est une vue schématique en coupe selon la ligne A-A de la figure 21, et
- la figure 23 est une vue schématique en perspective d'une autre variante de réalisation d'un dispositif selon l'invention.

### Description détaillée d'un mode de réalisation de l'invention

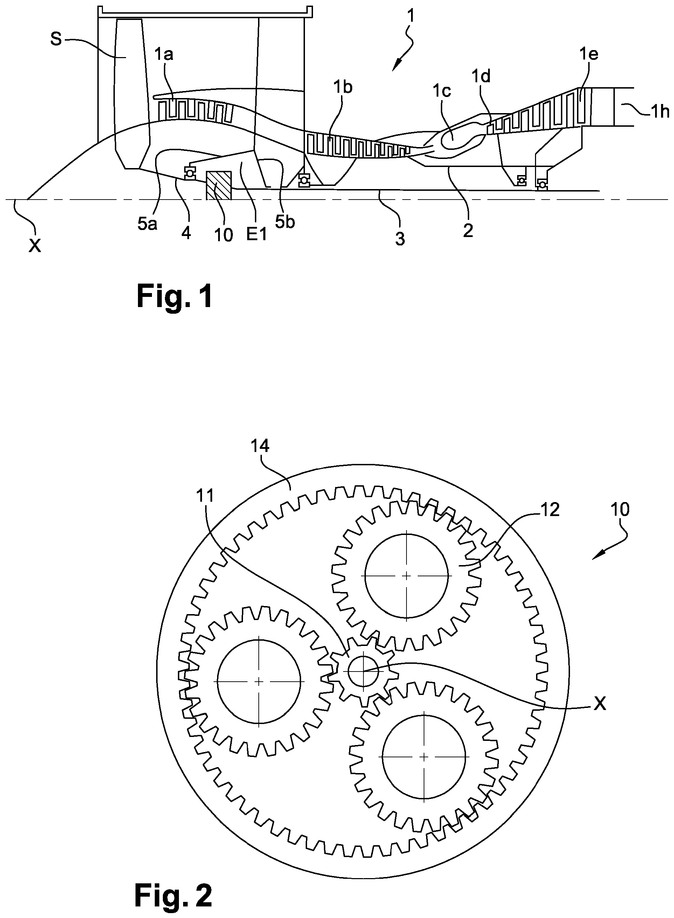

La figure 1 montre une turbomachine 1 qui comporte, de manière classique, une hélice de soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

L'hélice de soufflante S est entraînée par un arbre de soufflante 4 qui est couplé à l'arbre BP 3 au moyen d'un réducteur épicycloïdal 10 représenté ici schématiquement.

Le réducteur 10 est positionné dans la partie avant de la turbomachine. Une structure fixe comportant schématiquement, ici, une partie amont 5a et une partie aval 5b est agencée de manière à former une enceinte E1 entourant le réducteur 10. Cette enceinte E1 est ici fermée en amont par des joints au niveau d'un palier permettant la traversée de l'arbre de soufflante 4, et en aval par des joints au niveau de la traversée de l'arbre BP 3.

En référence à la figure 2, le réducteur 10 comprend pour l'essentiel un pignon d'engrenage planétaire dit solaire 11 dont l'axe de rotation est centré sur l'axe X de la turbomachine, une couronne 14 s'étendant autour du solaire et dont l'axe de révolution est centré sur l'axe X, et une série de pignons de satellites ou satellites 12 qui sont agencés entre le solaire 11 et la couronne 14 et engrenés avec ceux-ci. Le nombre de satellites 12 est généralement défini entre trois et cinq, jusqu'à sept.

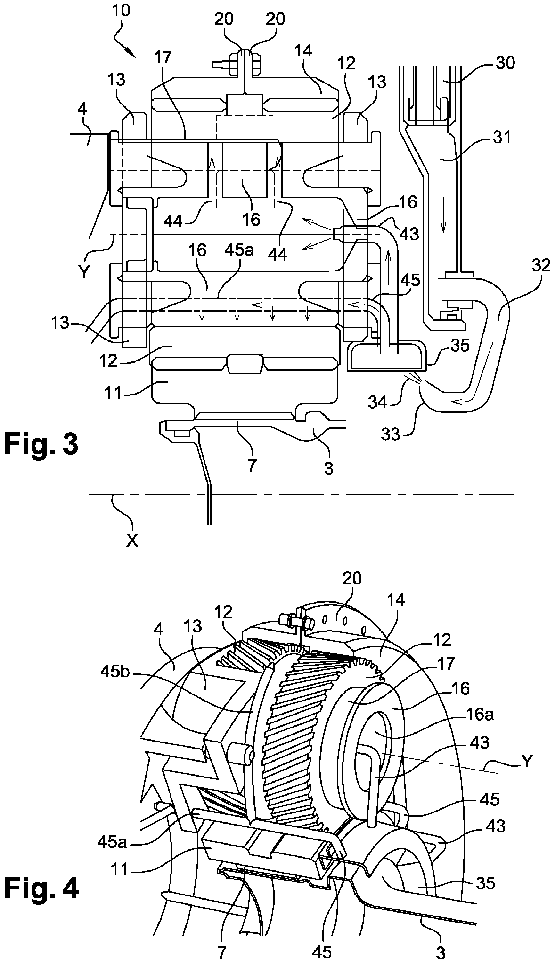

En référence à la figure 3, la couronne 14 est fixe et fixée par l'intermédiaire de brides 20 à la structure fixe 5a, 5b de la figure 1. Le réducteur 10 embraye d'une part sur l'arbre BP 3 par l'intermédiaire de cannelures 7 qui entraînent le solaire 11, et d'autre part sur l'arbre de soufflante 4 qui est attaché à un porte-satellites 13. Chaque satellite 12 tourne librement autour d'un axe Y défini par un support tubulaire 16 porté par le porte-satellite 13, à l'aide d'un palier 17.

La rotation des satellites 12 autour de leur axe Y, du fait de la coopération de leurs dentures avec la denture de la couronne 14, entraîne la rotation du porte-satellites 13 autour de l'axe X, et par conséquent celle de l'arbre de soufflante 4 qui lui est lié, à une vitesse de rotation qui est inférieure à celle de l'arbre BP 3.

Les figures 3 et 4 montrent l'acheminement de l'huile vers le réducteur 10 et son cheminement à l'intérieur de celui-ci. Des flèches montrent sur la figure 3 le cheminement suivi par l'huile depuis, sur cet exemple, une pièce d'adaptation 31 liée à la structure fixe de la turbomachine, jusqu'aux pignons et aux paliers 17 à lubrifier.

Les moyens de lubrification comportent schématiquement trois parties qui vont être décrites ci-après successivement, une première partie liée à la structure fixe et délivrant l'huile vers les parties tournantes du réducteur 10, un rouet (ou écope centrifuge 35) tournant avec le porte-satellites 13 réceptionnant cette huile, et des circuits de distribution d'huile alimentés en huile par le rouet pour l'acheminer vers les endroits à lubrifier. La première partie comporte au moins un injecteur 32 dont l'extrémité calibrée est resserrée pour former un gicleur 33. L'huile est amenée vers l'injecteur par une canalisation d'acheminement 30, en provenance du réservoir du moteur (non représenté). La pièce d'adaptation 31 peut être interposée à côté du réducteur 10 sur la canalisation, de préférence en partie haute de façon à ce que l'huile puisse s'écouler vers le centre du réducteur par gravité. Le gicleur 33 éjecte l'huile sous la forme d'un jet 34. Le gicleur 33 est positionné ici radialement à l'intérieur du porte-satellites 13 et de l'écope 35 par rapport à l'axe X et le jet 34 est orienté avec une composante radiale dirigée vers l'extérieur du réducteur 10 de façon à impacter le fond de l'écope 35. En référence à la figure 4, le rouet de réception de l'huile lié au porte-satellites 13 comporte essentiellement une écope centrifuge 35, ici à section en U, dont l'ouverture en U est orientée en direction de l'axe de rotation X. Le rouet est agencé sur le porte-satellites 13 de manière à ce que le fond du U de l'écope 35 recueille le jet d'huile 34 éjecté par le gicleur 33.

Une première série de circuits de distribution d'huile correspond à des premières canalisations 43, qui sont réparties régulièrement sur la circonférence du réducteur 10 et en nombre égal à celui des satellites 12. Ces canalisations 43 partent radialement de l'écope 35 et pénètrent dans la chambre interne 16a de chaque support 16 (figure 3), qui est refermée par le porte-satellites 13. L'huile qui circule dans les premières canalisations 43 pénètre dans la chambre interne 16a puis passe, du fait de la force centrifuge, dans des passages 44, qui traversent chaque support 16 en étant orientés radialement. Ces passages 44 débouchent à la périphérie des supports 16, au niveau des paliers supportant les pignons des satellites 12 et assurent ainsi la lubrification de ces paliers. La deuxième série de circuits de distribution d'huile comprend des secondes canalisations 45 qui cheminent, depuis l'écope 35 entre les satellites 12 et se divisent en plusieurs canaux 45a, 45b. Les canaux 45a, 45b acheminent l'huile vers les engrenages formés par les pignons des satellites 12 et le solaire 11, d'une part, et les pignons des satellites 12 et la couronne externe 14, d'autre part. Chaque canal 45a s'étend axialement le long des pignons d'un satellite 12, entre ceux-ci et le solaire 11, et forme une rampe de lubrification sur toute la largeur des pignons. Le canal 45b, qui alimente l'engrenage entre la couronne 14 et les pignons des satellites 12, projette son huile au centre du cylindre formé par chaque satellite 12. Comme représenté, chaque satellite 12 est réalisé sous la forme de deux pignons parallèles qui engrènent respectivement avec deux demi-couronnes de la couronne 14 (figure 3). Les hélices de la denture de chaque satellite sont orientées en diagonale par rapport à l'axe Y de rotation du satellite 12, de façon à leur donner une fonction de rainures dans lesquelles l'huile est entraînée, depuis le milieu du cylindre jusqu'à sa périphérie, pour lubrifier l'engrenage sur toute sa largeur.

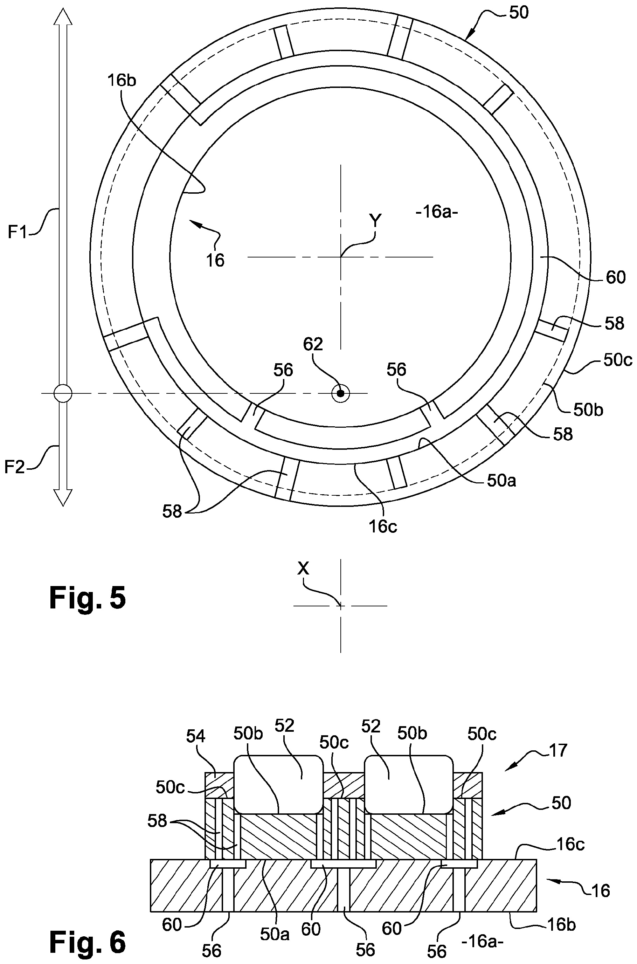

Les figures 5 et 6 montrent de manière très schématique un des supports tubulaires 16 du porte-satellites 13. Ce support 16 comprend une surface cylindrique interne 16b définissant la chambre interne 16a précitée, et une surface cylindrique externe 16c sur laquelle est montée une bague interne 50 d'un palier 17 ici à roulements et plus exactement à rouleaux.

L'association d'un support tubulaire 16 et d'une bague interne 50 d'un palier à roulements forme, dans le cadre de la présente invention, un organe tubulaire d'un porte-satellites. Comme c'est le cas des supports 16 et des bagues 50, les organes tubulaires sont de préférence répartis régulièrement autour du solaire du réducteur.

La bague interne 50 comprend une surface cylindrique interne 50a qui est en appui sur la surface 16c et des surfaces cylindriques externes 50c entre lesquelles sont disposées des pistes cylindriques externes de guidage 50b. Les pistes 50b sont au nombre de deux et permettent de guider deux séries annulaires adjacentes de rouleaux 52. Les surfaces 50c sont au nombre de trois et permettent de guider des cages 54 de maintien des rouleaux des deux séries. Chaque piste 50b est située entre deux surfaces 50c.

L'huile qui est amenée dans la chambre 16a de chaque support tubulaire 16 est acheminée jusqu'au palier 17 par les passages 44 précités (figure 3) qui comprennent d'une part des trous 56 formés dans le support 16 et des conduits 58 formés dans la bague intérieure 50. Les trous 56 ont une orientation sensiblement radiale et s'étendent dans l'épaisseur du support 16 depuis la surface 16b jusqu'à des rainures circonférentielles 60 formées sur la surface 16c. Les conduits 58 ont également une orientation sensiblement radiale et s'étendent dans l'épaisseur de la bague intérieure 50, depuis la surface 50a jusqu'aux pistes 50b et surfaces 50c. Certains conduits 58 débouchent sur les pistes 50b pour la lubrification des rouleaux 52 et d'autres débouchent sur les surfaces 50c pour la lubrification des cages 54.

Dans le cas représenté aux figures 5 et 6, les rainures 60 ont une orientation circonférentielle et s'étendent autour de l'axe Y de révolution du support 16, sur environ 300°. La référence 62 désigne le point d'alimentation en huile de la chambre 16a et donc d'injection d'huile par la canalisation 43 précitée (figures 3-4).

Comme évoqué dans ce qui précède, le porte-satellites 13 est mobile en rotation autour de l'axe X (représenté à la figure 5) et l'alimentation en huile de chaque support 16 est réalisée en un point 62 distant de cet axe. L'huile est centrifugée dès son alimentation de la chambre 16a. Les champs centrifuges appliqués à l'huile sont d'autant plus importants que cette huile est éloignée de l'axe X. Les flèches F1 et F2 représentent l'influence de ces champs sur la pression d'huile. Plus on s'éloigne de l'axe depuis le point 62, plus la pression augmente du fait des champs centrifuges, et plus on se rapproche de l'axe et plus cette pression diminue du fait des champs centrifuges. Le débit d'huile est ainsi le plus élevé sur les passages les plus éloignés du centre de rotation et le plus faible sur les passages les plus proches, précisément là où le besoin de lubrification est le plus important (les cages 54 du palier 17 exerçant une pression importante sur les pistes de la bague interne 50).

Ces problèmes de différences de débit peuvent mener à des frottements importants et à des enlèvements de matière sur les surfaces 50c de la bague 50.

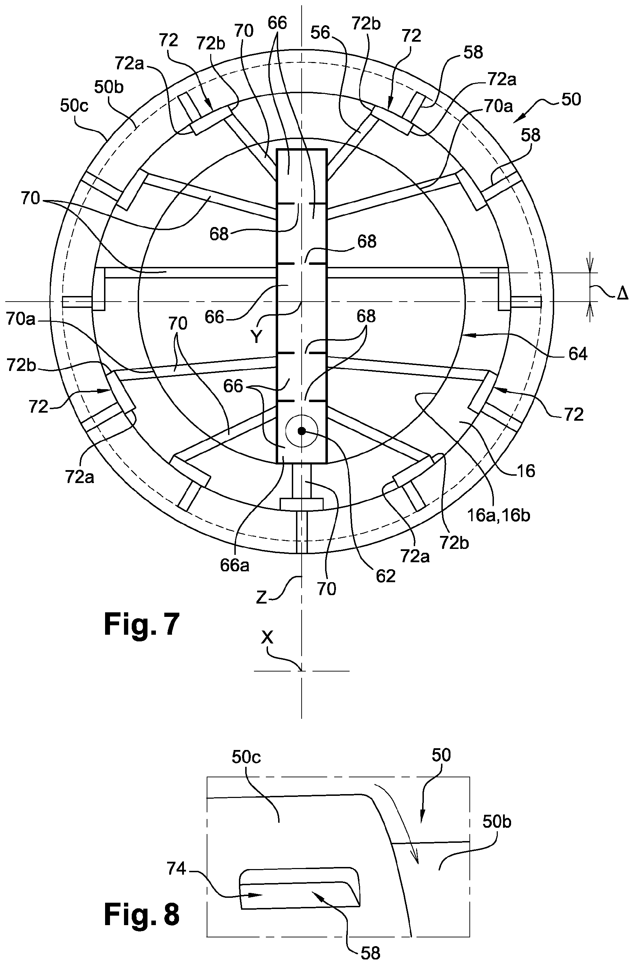

La description qui suit en référence aux figures 7 et suivantes explique les différents aspects de l'invention qui permettent une optimisation de la lubrification d'un réducteur à porte-satellites tournant pour lequel l'huile de lubrification est soumise en fonctionnement à des champs centrifuges importants.

La figure 7 illustre deux aspects de l'invention.

Le premier aspect concerne l'intégration d'un dispositif 64 de répartition d'huile dans chaque support tubulaire 16 d'un porte-satellites de réducteur.

Le dispositif 64 comprend un disque configuré pour être solidaire coaxialement d'un support tubulaire et comportant au moins deux cavités internes 66 connectées en série par un ou plusieurs orifices 68 calibrés, l'une de ces cavités, appelée cavité réceptrice 66a, étant connectée à l'entrée d'huile 62, et des canaux internes 70 calibrés d'acheminement d'huile s'étendant depuis les cavités 66 jusqu'à des orifices 70a de sortie d'huile prévus à la périphérie externe du disque.

Le dispositif 64 ou le disque peut être directement intégré et donc formé d'une seule pièce avec le support tubulaire 16. En variante, il est rapporté et fixé, par exemple par frettage, dans le support tubulaire.

Comme dans l'exemple représenté, les cavités 66 sont de préférence agencées le long d'une ligne Z qui passe sensiblement par le centre du disque. Cette ligne Z peut être orientée dans une direction radiale par rapport à l'axe X de rotation du porte-satellites.

Les cavités 66 sont ici au nombre de cinq et sont séparées les unes des autres par des diaphragmes comportant les orifices 68 calibrés précités. Les orifices 68 sont alignés sur la ligne Z dans l'exemple représenté. L'entrée d'huile 62 est ici connectée à la cavité la plus proche de l'axe X et de la périphérie du disque.

Le nombre de canaux 70 peut être fonction du nombre de cavités 66 et du nombre de rainures 72 qui sont formées sur la surface cylindrique externe 16c du support et qui doivent être alimentées en huile. Chaque rainure 72 est alimentée par un unique canal 70 dans l'exemple représenté et est reliée à ce canal par un unique trou 56 du support 16. Les canaux 70 ainsi que les cavités 66 s'étendent de préférence dans le plan du disque. Ils sont formés par exemple dans l'épaisseur de ce disque.

Chaque cavité 66 est ici reliée à au moins deux canaux 70. La cavité 66a reliée à l'entrée d'huile 62, qui est située la plus proche de l'axe X, est reliée par trois canaux 70 à trois rainures 72. L'un de ces trois canaux 70 s'étend depuis la cavité 66a vers l'axe X, le long de la ligne Z, et les deux autres s'étendent de part et d'autre de la cavité 66a. Les autres cavités 66 sont reliées par deux canaux 70 à deux rainures 72, les deux canaux de chaque cavité étant situés de part et d'autre de cette cavité. Les canaux s'étendent sensiblement radialement depuis l'axe Y du support radialement vers l'extérieur et le dispositif présente une symétrie par rapport à un plan passant par la ligne Z et perpendiculaire au plan du disque.

Les trous 56 du support s'étendent ici dans le prolongement des canaux 70 du dispositif et de leurs orifices 70a de sortie d'huile.

Selon l'invention, les rainures 72 ont une orientation axiale et non pas circonférentielle, c'est-à-dire qu'elles s'étendent le long de l'axe Y. Le nombre de rainures 72 peut varier et dépend notamment du nombre de secteurs angulaires des pistes 50b et surfaces 50c à lubrifier, indépendamment les uns des autres. Dans l'exemple représenté, ce nombre est de onze.

Les rainures 72 ont de préférence une largeur ou dimension circonférentielle autour de l'axe Y qui est supérieure au diamètre des canaux 70, des trous 56 ainsi que des conduits 58. Comme cela est visible dans la figure 7, chaque rainure 72 comprend deux bords longitudinaux 72a, 72b opposés dont un premier 72a est situé au plus près de l'axe X (par rapport au second) et est relié aux conduits 58, et dont le second 72b est situé au plus loin de cet axe X (par rapport au premier) et est relié au trou 56.

Ce désalignement Δ entre les conduits 58, d'une part, et le canal 70 et le trou 56, d'autre part, concerne le second aspect de l'invention et permet d'assurer une distribution équitable de l'huile dans tous les trous 56 situés sur le même secteur angulaire, de l'amont à l'aval de la bague interne 50, et ce malgré l'alimentation en huile par un seul canal 70 et un seul trou 56. En effet, en fonctionnement, l'huile est acheminée par le canal 70 correspondant dans la rainure 72, au niveau de son bord longitudinal 72b, l'huile parvient ensuite au niveau des conduits 58 qui sont reliés au bord 72a opposé et sont de préférence tous situés dans un même plan axial pour un secteur donné de la bague 50.

Afin d'équilibrer les débits dans les différents trous 56, on peut ajuster les diamètres des orifices 68 calibrés des diaphragmes et les sections des canaux 70. Ceux-ci doivent diminuer au fur et à mesure qu'ils s'éloignent de l'axe X, dans une proportion à définir grâce à un modèle hydraulique. Les canaux 70 qui s'étendent depuis une cavité 66, sensiblement vers l'axe X, comme c'est le cas des canaux reliés à la cavité 66a raccordée à l'entrée d'huile 62, ont donc une section de passage qui peut augmenter vers l'axe X. Les canaux 70 qui s'étendent depuis une cavité 66, sensiblement à l'opposé de l'axe X, ont donc une section de passage qui peut diminuer vers l'axe X. Enfin, les canaux qui se situent globalement à la même distance de l'axe X, sur toute leur étendue, pourraient avoir une section de passage identique. Les diamètres des orifices 68 calibrés diminuent au fur et à mesure qu'ils s'éloignent de l'axe X. Les diamètres des canaux 70 peuvent varier entre 0,5 et 3mm, et de préférence entre 0,7 et 2mm. Les diamètres des orifices 68 calibrés peuvent varier entre 0,5 et 7mm, et de préférence entre 0,7 et 5mm.

Grâce à la symétrie du dispositif 64, les canaux 70 situés de part et d'autre de chaque cavité 66 reçoivent le même débit, ce qui est impossible à obtenir avec des rainures circonférentielles telles qu'illustrées aux figures 5 et 6.

Compte tenu de la forte pression exercée par les cages 54 qui sont centrifugées contre le support 16, les conduits 58 de la bague interne 50 débouchant sur les surfaces 50c des cages (les plus proches du centre de rotation, encerclés sur la figure 7) devront permettre la formation d'un coin d'huile pour un fonctionnement hydrodynamique. La formation de ce coin d'huile peut être facilitée en créant des cuvettes 74 (figure 8) sur les pistes, dans lesquelles débouchent les conduits 58.

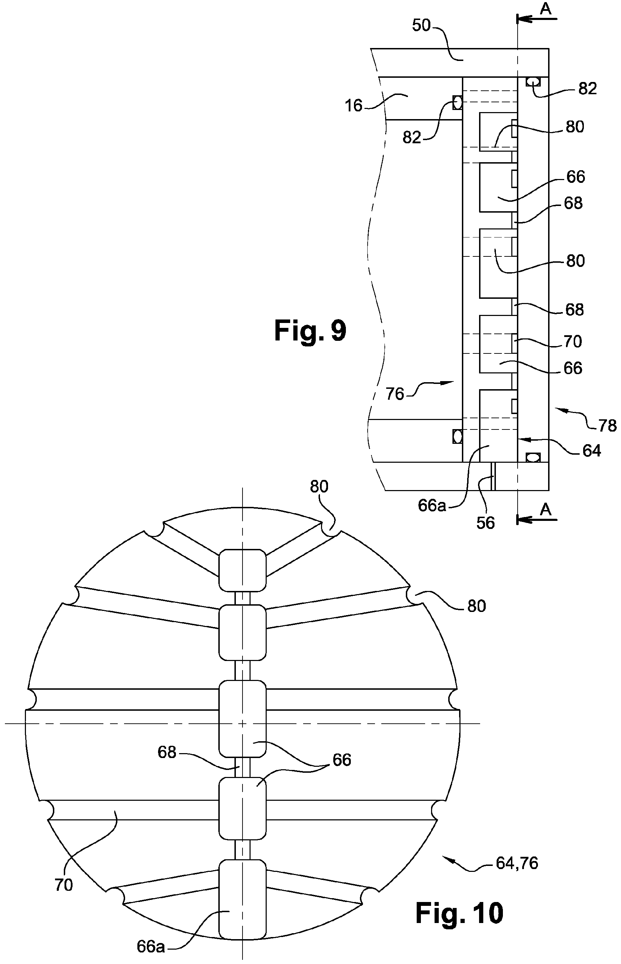

Les figures 9 à 12 illustrent un premier exemple de réalisation d'un dispositif 64 de distribution d'huile selon l'invention.

Le dispositif 64, toujours en forme de disque, comprend ici deux parties à savoir une base 76 et un couvercle 78, tous deux annulaires et destinés à être fixés coaxialement l'un sur l'autre.

Comme décrit dans ce qui précède, le dispositif 64 est ici destiné à être engagé dans le support tubulaire 16 et à y être fixé par frettage. La base 76 et le couvercle 78 ont de préférence un même diamètre externe et sont tous deux destinés à être frettés dans le support tubulaire 16, ou dans le support 16 et la bague 50, comme représenté à la figure 9. Des joints annulaires d'étanchéité 82 peuvent être montés entre le dispositif et le support 16 et/ou la bague 50 pour éviter toute fuite d'huile en fonctionnement.

La base 76 comprend deux faces planes parallèles dont une est usinée pour y définir les emplacements et les volumes et dimensions des cavités 66, des orifices 68 et des canaux 70. Le couvercle 78 est rapporté sur la base 76 pour fermer ces volumes. Les canaux 70 s'étendent ici depuis les cavités 66 jusqu'à des lunules 80 rectilignes extérieures, qui sont parallèles les unes aux autres et à l'axe Y du dispositif, et sont destinées à être raccordées aux trous 56 ou aux rainures 72 précitées.

L'usinage de la base 76 est par exemple réalisé à l'aide d'une seule fraise boule. Le diamètre hydraulique de chaque portion serait alors réglé en jouant par exemple sur la profondeur de pénétration de la fraise. La figure 9 montre par exemple que la profondeur d'usinage des cavités 66 est plus importante que celle des canaux 70 et orifices 68. Les faces d'appui de la base 76 et du couvercle 78 doivent être parfaitement planes et rectifiées pour assurer une bonne étanchéité. Le frettage du dispositif 64 doit permettre d'éviter le passage d'huile entre les lunules 80.

La cavité 66a qui est située au plus proche de la périphérie du dispositif est ici celle qui est située la plus proche de l'axe X et qui est reliée à l'entrée d'huile 62. Cette cavité débouche radialement sur la périphérie externe de la base 76 si bien qu'un trou 56 du support 16 peut être directement en communication fluidique avec cette cavité (sans canal intermédiaire - figure 9).

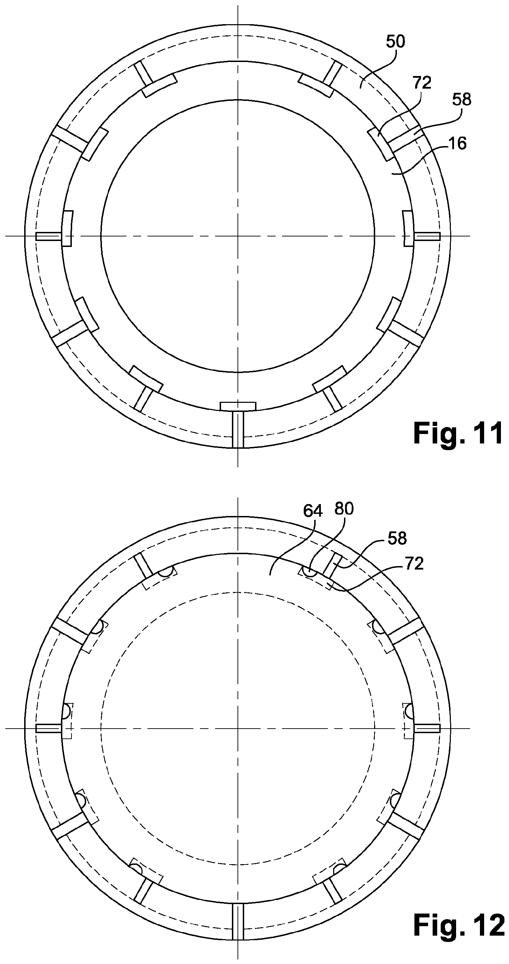

La figure 11 représente un support tubulaire 16 et la bague interne 50 montée sur ce support, et illustre le second aspect de l'invention décrit dans ce qui précède. Chaque rainure 72 est reliée, d'une part, à plusieurs conduits 58 situés dans des plans perpendiculaires à l'axe Y différents, et, d'autre part, à un unique trou 56. Les trous 56 du support n'apparaissent pas ici car la coupe représentée ne passe pas par ces trous. Cette coupe passe par l'un des conduits 58 pour chaque rainure 72.

La figure 12 représente une vue similaire avec le dispositif des figures 9 et 10, qui est monté coaxialement au support. Comme on le voit dans cette figure, les lunules 80 sont alignées en regard des rainures 72, et en particulier des bords longitudinaux 72b de ces rainures, les plus éloignés de l'axe X.

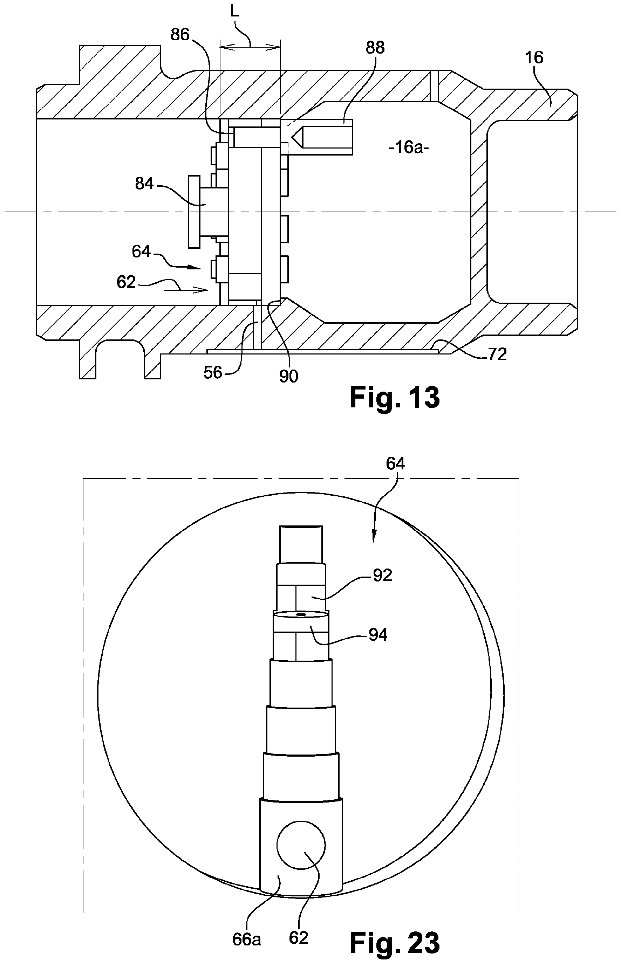

Les figures 13 à 15 illustrent un second exemple de réalisation d'un dispositif de distribution d'huile selon l'invention.

Comme le précédent mode de réalisation, le dispositif 64, toujours en forme de disque, comprend ici deux parties à savoir une base 76 et un couvercle 78, tous deux annulaires et destinés à être fixés coaxialement l'un sur l'autre.

Le dispositif 64 est ici destiné à être engagé dans le support tubulaire 16 et à y être fixé par frettage (figure 13). La base 76 et le couvercle 78 ont de préférence un même diamètre externe et sont tous deux destinés à être frettés dans le support tubulaire.

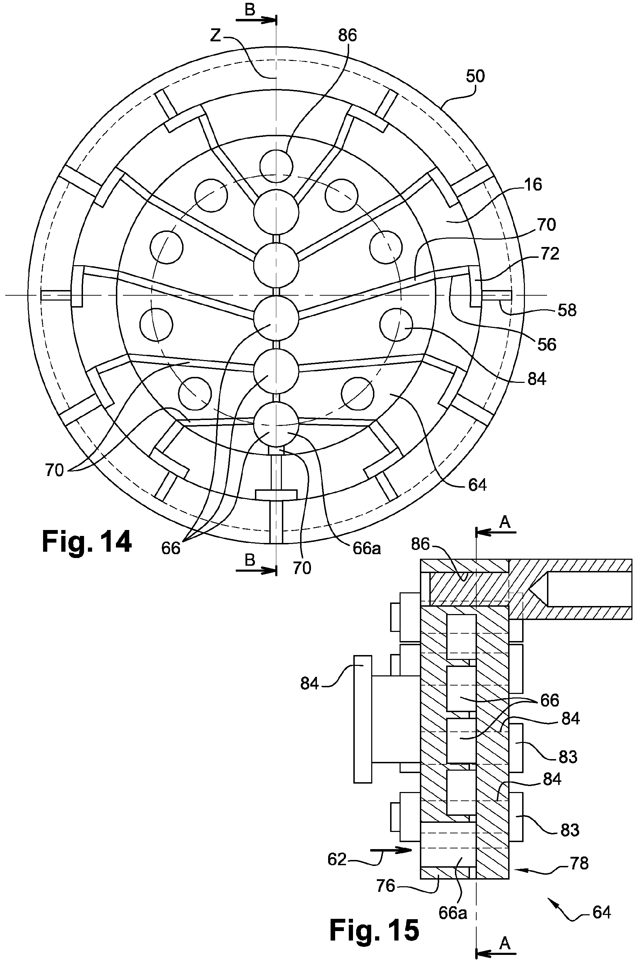

La base 76 comprend deux faces planes parallèles dont une est usinée pour y définir les emplacements et les volumes et dimensions des cavités 66, des orifices 68 et des canaux 70. Le couvercle 78 est rapporté sur la base pour fermer ces volumes. L'ensemble est fixé par des boulons 83 qui traversent des orifices 84 alignés de la base et du couvercle (figures 14 et 15). Un fil frein peut être utilisé pour relier les boulons 83 ensemble et empêcher ainsi leur desserrage accidentel.

L'usinage de la base 76 est par exemple réalisé à l'aide d'une seule fraise boule. Le diamètre hydraulique de chaque portion serait alors réglé en jouant par exemple sur la profondeur de pénétration de la fraise. La figure 9 montre par exemple que la profondeur d'usinage des cavités 66 est plus importante que celle des canaux 70 et orifices 68. Les faces d'appui de la base et du couvercle doivent être parfaitement planes et rectifiées pour assurer une bonne étanchéité.

La cavité 66 qui est située au plus proche de la périphérie du dispositif est ici celle qui est située la plus proche de l'axe X et qui est reliée à l'entrée d'huile 62. Cette cavité est reliée par un canal 70 aligné sur la ligne Z au trou 56 correspondant du support 16. Cette cavité débouche en outre axialement à l'intérieur de la chambre 16a du support 16 afin d'être raccordée à l'entrée d'huile 62.

Les cavités ont ici une forme générale cylindrique dont l'axe est orienté perpendiculairement au plan du disque formant le dispositif.

Dans l'exemple représenté, la base 76 est solidaire d'un organe 84 de préhension pour faciliter le montage et le démontage du dispositif et en particulier son frettage. Le dispositif 64 comprend en outre un moyen d'indexage pour son positionnement angulaire dans le support tubulaire 16. Il peut s'agir d'un orifice 86 traversant la base et le couvercle et positionné dans un endroit prédéterminé, par exemple diamétralement à l'opposé de l'entrée d'huile 62. Lors du montage, un opérateur est destiné à positionner angulairement le dispositif dans le support au moyen d'un pion d'indexation 88 qui est destiné à être engagé dans l'orifice 86.

Avantageusement, la longueur du pion 88 destiné à être engagée dans l'orifice 86 est supérieure à la longueur L de la zone de frettage du dispositif dans le support 16, de façon à ce que l'engagement du pion dans la lunule de l'épaulement 90 et donc le positionnement angulaire du dispositif aient lieu avant le frettage effectif du dispositif dans le support. Le serrage rendrait difficile un positionnement angulaire a postériori.

Le dispositif 64 est de préférence en appui axial sur un épaulement cylindrique interne 90 du support en position frettée. En plus du frettage, la pression d'huile s'exerçant sur la face amont du dispositif, celui-ci ne risque pas de s'écarter de l'épaulement 90 contre lequel il vient en butée.

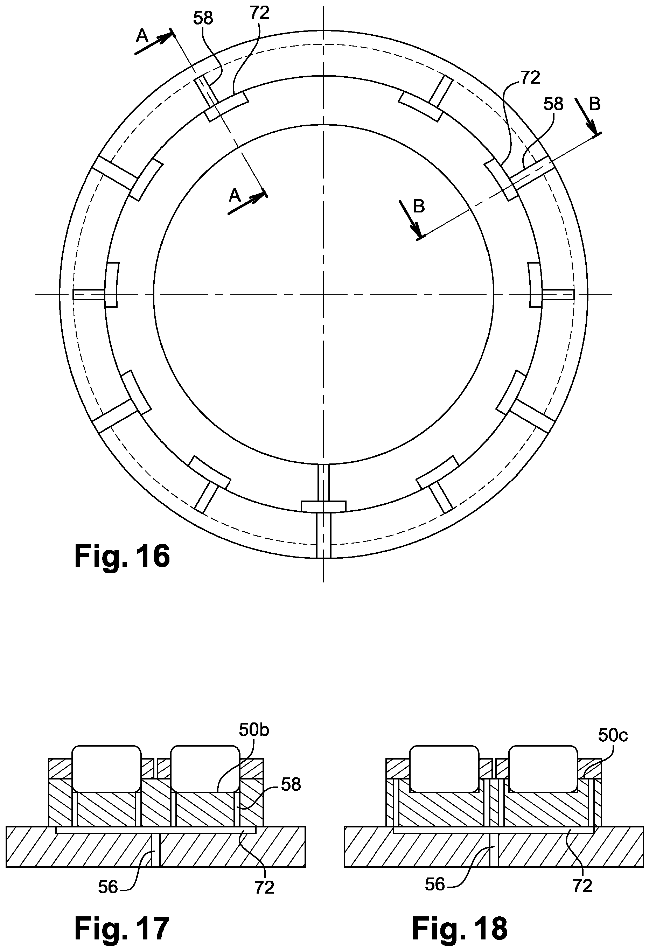

Les figures 16 et 17 permettent de visualiser le nombre et la position des conduits 58 de lubrification des pistes 50b, qui sont reliés à l'un des bords longitudinaux 72a d'une rainure 72. Comme évoqué dans ce qui précède en relation avec le second aspect de l'invention, le trou 56 est raccordé au bord longitudinal 72b opposé de cette rainure mais sa position axiale vis-à-vis de cette rainure importe peu. La même chose s'applique à chaque trou 56 d'alimentation d'une rainure d'acheminement d'huile aux conduits de lubrification des surfaces 50c (figures 16 et 18).

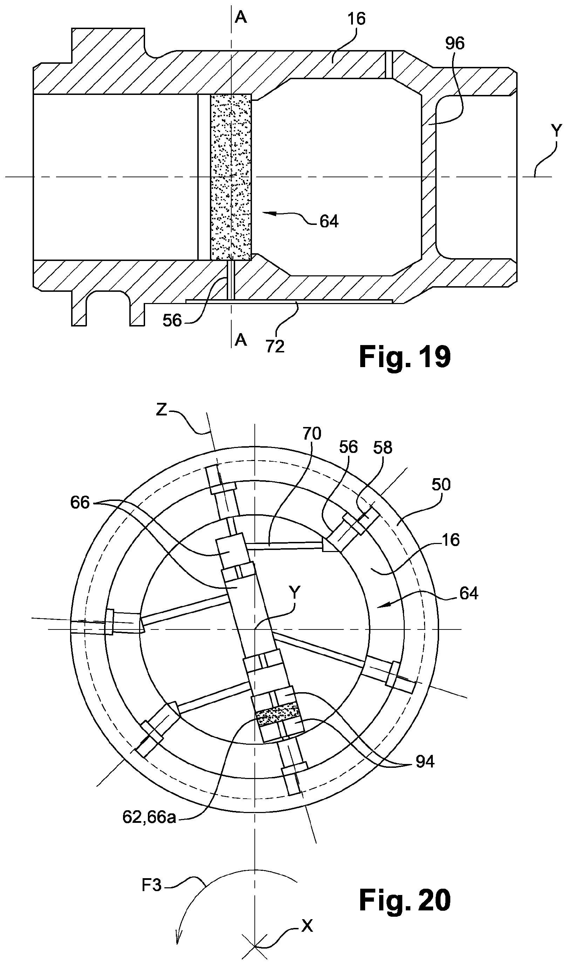

Les figures 18 et 19, d'une part, et 20 et 21, d'autre part, illustrent deux autres exemples de réalisation d'un dispositif de distribution d'huile selon l'invention.

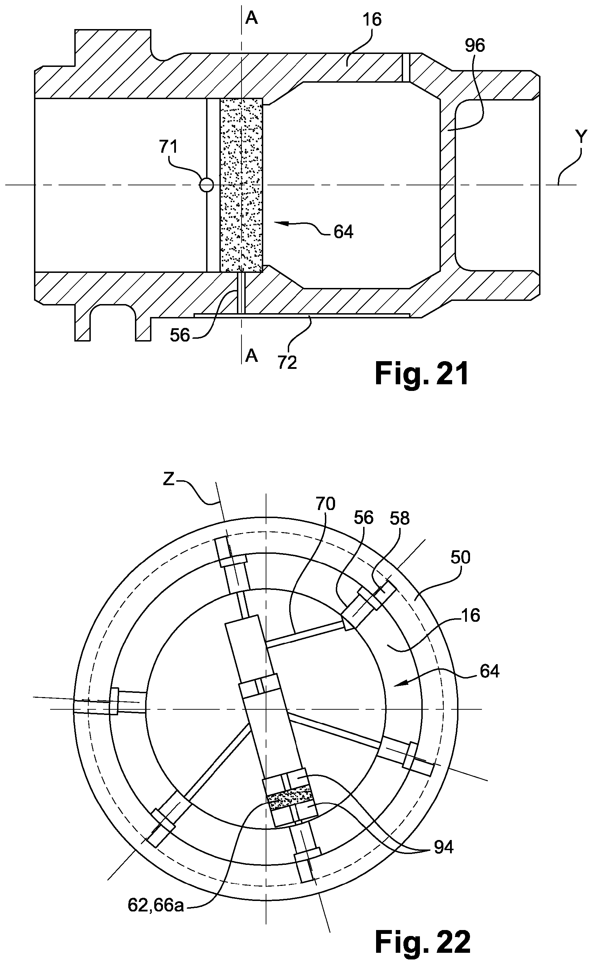

Ces deux variantes utilisent un dispositif sous forme d'un disque tel que représenté à la figure 22. Le disque comprend dans son plan un alésage interne 92 qui est étagé le long de la ligne Z et qui comprend une série de tronçons de différents diamètres et agencés de manière croissante ou décroissante selon la direction considérée le long de la ligne Z. L'alésage est par exemple réalisé au moyen d'un foret ou plusieurs forets à extrémité(s) plate(s). Des pastilles 94 prépercées sont engagées et fixées, de préférence par frettage, dans les tronçons de l'alésage 92 et sont destinées à définir entre elles les cavités 66 précitées du disque. Les pastilles 94 sont prépercées pour définir les orifices calibrés 68 et forment donc les diaphragmes évoqués dans ce qui précède. La cavité de plus grand diamètre est destinée à être raccordée à l'entrée d'huile 62 et débouche à la périphérie du disque. L'alésage 92 est réalisé en usinant le disque en commençant par cette cavité de plus grand diamètre. Le nombre de tronçons de l'alésage correspond au nombre de cavités du disque.

Dans la variante de réalisation des figures 19 et 20, le dispositif 64 ne présente pas une symétrie comme évoqué dans ce qui précède. Les cavités 66 sont bien alignées le long d'une ligne Z mais qui n'est pas orientée dans une direction radiale par rapport à l'axe X de rotation du porte-satellites mais elle est un peu décalée pour favoriser l'apparition d'un coin d'huile. Les canaux ne sont pas forcément régulièrement répartis autour de l'axe Y du support 16. Le dispositif comprend ici seulement quatre cavités 66 et six canaux 70. Cinq canaux 70 alimentent des trous 56 d'amenée d'huile aux pistes 50b de guidage des rouleaux, et un canal 70 alimente le trou d'amenée d'huile à la piste de guidage de la ou des cages. La flèche F3 illustre le sens de rotation de la cage.

Dans la variante de réalisation des figures 21 et 22, le dispositif 64 ne présente pas une symétrie comme évoqué dans ce qui précède. Les cavités 66 sont bien alignées le long d'une ligne Z. La ligne Z n'est pas orientée dans une direction radiale par rapport à l'axe X de rotation du porte-satellites mais elle est un peu décalée pour favoriser l'apparition d'un coin d'huile. Les canaux ne sont pas forcément régulièrement répartis autour de l'axe Y du support 16. Le dispositif comprend ici seulement quatre cavités 66 et cinq canaux 70. Tous ces canaux 70 alimentent des trous 56 d'amenée d'huile aux pistes 50b de guidage des rouleaux. Ces trous sont tous situés dans un même plan perpendiculaire à l'axe Y. L'alimentation en huile de la piste de guidage de la cage est assurée par un simple trou 71.

Les figures 19 et 21 permettent en outre de visualiser un support tubulaire 16 d'un porte-satellites. On peut constater que ce support comprend une paroi transversale 96 dans l'épaisseur de laquelle pourrait être formé le dispositif selon l'invention qui pourrait être ainsi intégré au support.

## Revendications

1. Dispositif (64) de répartition d'huile pour un porte-satellites tournant d'un réducteur mécanique (10) d'une turbomachine, ce dispositif étant configuré pour être solidaire d'un organe tubulaire (16, 50) de support d'un palier (17) du porte-satellites, ledit dispositif comportant une entrée d'huile (62) et une rangée de sorties d'huile débouchant sur une surface externe destinée à être entourée au moins en partie par ledit organe, **caractérisé en ce que** ledit dispositif comportant au moins deux cavités internes (66) connectées en série par au moins un orifice (68) calibré, l'une de ces cavités, appelée cavité réceptrice (66a) étant connectée à ladite entrée d'huile, et des canaux internes (70) calibrés d'acheminement d'huile s'étendant depuis lesdites cavités jusqu'à des orifices (70a) de ladite surface externe du dispositif pour former lesdites sorties d'huile.

2. Dispositif (64) selon la revendication 1, dans lequel il est configuré pour être rapporté et fixé, par exemple par frettage, dans ledit organe tubulaire (16, 50).

3. Dispositif (64) selon la revendication 1 ou 2, dans lequel les cavités (66) sont agencées le long d'une ligne (Z) qui passe sensiblement par le centre du dispositif et de préférence par un rayon du dispositif.

4. Dispositif (64) selon la revendication précédente, dans lequel ladite cavité réceptrice (66a) est proche de la périphérie du dispositif et est destinée à être la plus proche d'un axe (X) de rotation du porte-satellites lorsque le dispositif est monté sur le porte-satellites.

5. Dispositif (64) selon l'une des revendications précédentes, dans lequel il comprend un alésage interne (92) dans lequel sont rapportées et fixées, par exemple par frettage, des pastilles (94) qui comprennent chacune un desdits orifices (68) calibrés, lesdites pastilles délimitant entre elles lesdites cavités (66).

6. Dispositif (64) selon la revendication précédente, dans lequel ledit alésage (92) est étagé et comprend plusieurs tronçons de diamètres différents et de préférence agencés du tronçon de plus petit diamètre vers le tronçon de plus grand diamètre, ce dernier étant débouchant à la périphérie du dispositif.

7. Dispositif (64) selon l'une des revendications 1 à 4, dans lequel il comprend une base (76) circulaire dont une face est usinée, et un couvercle annulaire (78) rapporté sur ladite base, du côté de sa face usinée, cette face étant usinée pour définir lesdites cavités (66) et lesdits canaux (70) entre la base et le couvercle.

8. Porte-satellites tournant (13) pour un réducteur mécanique (10) d'une turbomachine, ce porte-satellites comportant une rangée annulaire d'organes tubulaires (16, 50) de support de paliers (17), qui sont parallèles entre eux et à un axe (X) de rotation du porte-satellites, des pistes et surfaces cylindriques (50b, 50c) de guidage de roulements et d'au moins une cage de ces roulements étant définis à la périphérie de chacun des organes tubulaires, et au moins un dispositif (64) selon l'une des revendications précédentes étant solidaire coaxialement de chacun de ces organes tubulaires.

9. Porte-satellites (13) selon la revendication précédente, dans lequel chacun desdits organes tubulaires comprend un support tubulaire (16) comportant une surface cylindrique externe (16b) de montage d'une bague interne (50) de palier, et sur laquelle sont formées des rainures (72) de circulation d'huile qui sont en communication fluidique avec lesdites sorties d'huile du dispositif, d'une part, et des conduits (58) d'huile formés dans la bague interne, d'autre part, lesdites rainures étant sensiblement rectilignes et parallèles entre elles ainsi qu'à un axe de révolution (Y) de la surface cylindrique.

10. Turbomachine d'aéronef, **caractérisée en ce qu'**elle comprend un dispositif (64) selon l'une des revendications 1 à 7 ou un porte-satellites (13) selon la revendication 8 ou 9.

## Patentansprüche

1. Ölverteilungsvorrichtung (64) für einen rotierenden Planetenträger eines mechanischen Untersetzungsgetriebes (10) einer Turbomaschine, wobei diese Vorrichtung so ausgebildet ist, dass sie mit einem röhrenförmigen Organ (16, 50) zum Tragen eines Lagers (17) des Planetenträgers fest verbunden ist, wobei die Vorrichtung einen Öleinlass (62) und eine Reihe von Ölauslässen umfasst, die auf einer Außenfläche münden, die dazu bestimmt ist, zumindest teilweise von dem Organ umgeben zu sein, **dadurch gekennzeichnet, dass** die Vorrichtung zumindest zwei innere Hohlräume (66), die durch zumindest eine kalibrierte Öffnung (68) in Reihe geschaltet sind, wobei einer dieser Hohlräume, der so genannte Aufnahmehohlraum (66a), mit dem Öleinlass verbunden ist, und kalibrierte innere Ölförderkanäle (70), die sich von den Hohlräumen bis zu Öffnungen (70a) der Außenfläche der Vorrichtung erstrecken, um die Ölauslässe zu bilden, umfasst.

2. Vorrichtung (64) nach Anspruch 1, worin sie so konfiguriert ist, dass sie in das röhrenförmige Organ (16, 50) angebracht und befestigt wird, beispielsweise durch Einspannen.

3. Vorrichtung (64) nach Anspruch 1 oder 2, worin die Hohlräume (66) entlang einer Linie (Z) angeordnet sind, die im Wesentlichen durch den Mittelpunkt der Vorrichtung und vorzugsweise durch einen Radius der Vorrichtung verläuft.

4. Vorrichtung (64) nach dem vorstehenden Anspruch, worin sich der Aufnahmehohlraum (66a) in der Nähe des Umfangs der Vorrichtung befindet und dazu bestimmt ist, einer Drehachse (X) des Planetenträgers am nächsten zu sein, wenn die Vorrichtung auf dem Planetenträger montiert ist.

5. Vorrichtung (64) nach einem der vorstehenden Ansprüche, worin sie eine Innenbohrung (92) umfasst, wobei in der Pellets (94), die jeweils eine der kalibrierten Öffnungen (68) umfassen, angebracht und befestigt sind, beispielsweise durch Einspannen, wobei die Pellets die Hohlräume (66) zwischen sich begrenzen.

6. Vorrichtung (64) nach dem vorstehenden Anspruch, worin die Bohrung (92) abgestuft ist und mehrere Abschnitte mit unterschiedlichen Durchmessern umfasst, die vorzugsweise von dem Abschnitt mit dem kleinsten Durchmesser zu dem Abschnitt mit dem größten Durchmesser angeordnet sind, wobei letzterer am Umfang der Vorrichtung mündet.

7. Vorrichtung (64) nach einem der Ansprüche 1 bis 4, worin sie eine kreisförmige Basis (76), bei der eine Fläche bearbeitet ist, und eine ringförmige Abdeckung (78), die auf der Basis auf der Seite ihrer bearbeiteten Fläche aufgesetzt ist, wobei diese Fläche bearbeitet ist, um die Hohlräume (66) und die Kanäle (70) zwischen der Basis und der Abdeckung zu definieren, umfasst.

8. Rotierender Planetenträger (13) für ein mechanisches Untersetzungsgetriebe (10) einer Turbomaschine, wobei dieser Planetenträger eine ringförmige Reihe von röhrenförmigen Organen (16, 50) zum Tragen von Lagern (17), die zueinander und zu einer Drehachse (X) des Planetenträgers parallel sind, der Spuren und zylindrische Oberflächen (50b, 50c) für das Lager Führung und zumindest einen Käfig dieser Lager, die am Umfang jedes der röhrenförmigen Organe angeordnet sind, und zumindest eine Vorrichtung (64) nach einem der vorstehenden Ansprüche, die koaxial mit jedem dieser röhrenförmigen Organe einstückig ist, umfasst.

9. Planetenträger (13) nach dem vorstehenden Anspruch, worin jedes der röhrenförmigen Organe einen röhrenförmigen Träger (16) mit einer äußeren zylindrischen Oberfläche (16b) zum Anbringen eines inneren Lagerrings (50) umfasst und an dem Ölumlaufnuten (72) ausgebildet sind, die in Fluidverbindung mit einerseits den Ölauslässen der Vorrichtung und andererseits Ölkanälen (58) in dem inneren Ring stehen, wobei die Nuten im Wesentlichen geradlinig und parallel zueinander sowie zu einer Drehachse (Y) der zylindrischen Oberfläche sind.

10. Turbomaschine für Luftfahrzeuge, **dadurch gekennzeichnet, dass** sie eine Vorrichtung (64) nach einem der Ansprüche 1 bis 7 oder einen Planetenträger (13) nach Anspruch 8 oder 9 umfasst.

## Claims

1. Device (64) of an oil distribution for a rotating planet carrier of a mechanical reduction gear (10) of a turbomachine, this device being configured to be integral with a tubular member (16, 50) for supporting a bearing (17) of the planet carrier, said device comprising an oil inlet (62) and a row of oil outlets opening onto an external surface intended to be surrounded at least in part by the said member, **characterized in that** said device comprising at least two internal cavities (66) connected in series by at least one calibrated orifice (68), one of said cavities, referred to as a receiving cavity (66a) being connected to said oil inlet, and internal calibrated channels (70) for conveying oil which extends from said cavities to orifices (70a) of said external surface of the device to form said oil outlets.

2. The device (64) according to claim 1, wherein it is configured to be attached and fixed, for example by shrink-fitting, in said tubular member (16, 50).

3. The device (64) according to claim 1 or 2, wherein the cavities (66) are arranged along a line (Z) which passes substantially through the center of the device and preferably through a radius of the device.

4. The device (64) according to the preceding claim, wherein said receiving cavity (66a) is close to the periphery of the device and is intended to be closest to an axis (X) of rotation of the planet carrier when the device is mounted on the planet carrier.

5. The device (64) according to one of the preceding claims, in which it comprises an internal bore (92) in which are inserted and fixed, for example by shrink-fitting, pellets (94) which each comprise one of the said calibrated orifices (68), the said pellets delimiting between them said cavities (66).

6. The device (64) according to the preceding claim, in which said bore (92) is stepped and comprises several sections of different diameters and preferably arranged from the section of smallest diameter to the section of largest diameter, the latter opening out at the periphery of the device.

7. The device (64) according to one of claims 1 to 4, in which it comprises a circular base (76), one face of which is machined, and an annular cover (78) attached to said base, on the side of its machined face, this face being machined to define said cavities (66) and said channels (70) between the base and the cover.

8. A rotating planet carrier (13) for a mechanical reduction gear (10) of a turbomachine, this planet carrier comprising an annular row of tubular members (16, 50) for supporting bearings (17), which are parallel to each other and to an axis (X) of rotation of the planet carrier, cylindrical tracks and surfaces (50b, 50c) for guiding rolling elements and at least one cage of these rolling elements being defined at the periphery of each of the tubular members, and at least one device (64) according to one of the preceding claims being integral coaxially with each of these tubular members.

9. The planet carrier (13) according to the preceding claim, in which each of the said tubular members comprises a tubular support (16) comprising an external cylindrical surface (16b) for mounting an inner ring (50), and on which are formed oil circulation grooves (72) which are in fluid communication with said oil outlets of the device, on the one hand, and oil ducts (58) formed in the inner ring, on the other hand, said grooves being substantially rectilinear and parallel to each other and to an axis of revolution (Y) of the cylindrical surface.

10. An aircraft turbomachine, **characterized in that** it comprises a device (64) according to one of claims 1 to 7 or a planet carrier (13) according to claim 8 or 9.
